(19)

Europäisches
Patentamt
European
Patent Office
Office européen
des brevets

(11) **EP 2 337 258 A1**

(12) **EUROPEAN PATENT APPLICATION**

(43) Date of publication:
**22.06.2011 Bulletin 2011/25**

(51) Int Cl.:
*H04L 1/00* (2006.01)   *H04L 29/06* (2006.01)
*H04N 7/20* (2006.01)

(21) Application number: **10188948.3**

(22) Date of filing: **26.10.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.11.2009 DE 102009052242**

(71) Applicant: **Deutsches Zentrum für Luft- und
Raumfahrt e.V.
51147 Köln (DE)**

(72) Inventor: **Boussemart, Vincent
81241 München (DE)**

(74) Representative: **von Kreisler Selting Werner
Deichmannhaus am Dom
Bahnhofsvorplatz 1
50667 Köln (DE)**

(54) **Method of transmitting data in a time slicing mode in form of multiple bursts according to the multi-protocol encapsulation**

(57)   The invention is related to a method of transmitting data from a transmitter to a receiver, in particular in a DVB-Scenario. Data is transmitted in consecutive bursts and each burst comprises a plurality of MultiProtocol-Encapsulation (MPE) and Multiprotocol-Encapsulation-Inter-Burst Forward Error Correction (MPE-iFEC) sections. The data part of a burst (K) is not necessarily completely filled and thus contains a padding , i.e. it is possible that there is no data at the end of the ADST.

The transmitted sections comprise a time-slicing indicator indicating the remaining time (Δt) until the start of the next burst. Each time a section is detected the next burst start is calculated. For each MPE-section the receiver compares the time at which the next burst should start and the current time in order to decide whether this MPE-section belongs to the same burst or to a new burst.

According to the invention each time a section is detected the receiver calculates the time at which the next burst should start by adding to the current time the remaining time (Δt) indicated by the time-slicing indicator present in the detected MPE-section and subtracting therefrom an offset-value which is chosen depending on a processing time delay at the receiver.

An independent invention is related to a new method for detecting the presence of a new burst.

$$t_{next\_burst} = t_{clock} + \Delta t_n - \text{offset}$$
$$t_{next\_burst} = t_{clock} + \Delta t_{n+1} - \text{offset}$$
$$t_{next\_burst} = t_{clock} + \Delta t_{n+2} - \text{offset}$$

Data

Burst k          Burst k + 1          Time

Delay jitter

Fig.8

**Description**

The invention is related to a method of transmitting data from a transmitter to a receiver, in particular in a DVB-Scenario.

In the following different mechanisms and optimizations that can be used preferably in Multi-Protocol Encapsulation (MPE) - inter-burst Forward Error Correction (iFEC) receivers for decoding are presented.

The transmission of data is performed according to "Digital Video Broadcasting (DVB); DVB specification for data broadcasting, ETSI EN 301 192 V1.4.2, April 2008" in bursts: an amount of data is inserted in the physical layer according to a given duration. On the one hand Multi-Protocol Encapsulation - Forward Error Correction was defined in order to add redundancy information within a given burst. The content of the burst is protected and if some losses occur data can be recovered. MPE-FEC is able to recover from fade events which are in the order of hundreds milliseconds. MPE-FEC is used for instance in Digital Video Broadcasting - Terrestrial (DVB-T) as described in "Framing structure, channel coding and modulation for digital terrestrial television, ETSI EN 300 744 V1.6.1, Jan. 2009". On the other hand, when considering a reception using a satellite segment fade events become more critical. Shadowing can occur (element between the satellite and the terminal) and the duration and the frequency of the fade events depend on the terminal position. When considering a mobile terminal fade events are in the order of several seconds. As specified previously MPE-iFEC means MPE - inter-burst FEC, i.e. the redundancy is computed and distributed over several time-slice bursts and this directly increases the interleaver duration. When MPE-FEC is able to recover fade events which are in the order of hundred milliseconds, MPE-iFEC can recover fade events which are in the order of several seconds.

MPE-iFEC is used for receiving data on a mobile terminal while using a satellite transmission. The corresponding standard is the Digital Video Broadcasting - Satellite Handheld (DVB-SH) as described in "Framing Structure, channel coding and modulation for Satellite Services to Handheld devices (SH) below 3 GHz, ETSI EN 302 583 V1.1.1, July 2007" and will be considered from now on in the present application.

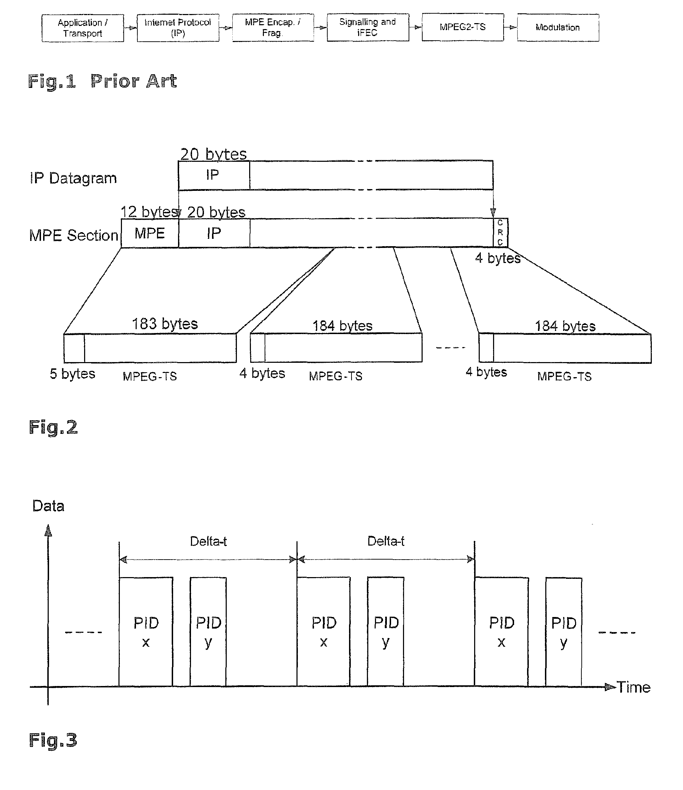

First, the mechanisms and optimizations that can be used in DVB-SH receivers which are compliant with MPE-iFEC are described. Data is transmitted and is received by the terminals in bursts. The layered approach considered at the transmission side is the one depicted in figure 1.

Data is generated by the application and encapsulated by the transport layer. It can be for instance a video encapsulated over the Real-Time Protocol (RTP) and the User Datagram Protocol (UDP). The packets issued from the application/transport layers are then forwarded to the Internet Protocol (IP) in order to be encapsulated. IP datagrams produced by the IP layer are transmitted to the Multi-Protocol Encapsulator (MPE) where a header (12 bytes) and a trailer (4 bytes, CRC check) are added. The next layer is responsible of the signaling and of the iFEC part. Actually according to some mechanisms which are described in "Guidelines for Implementation for Satellite Services to Handheld devices (SH) below 3GHz, ETSI TS 102 584 V1.1.1, Dec. 2008" data (MPE sections) is collected and redundancy is produced. The redundant data is encapsulated into MPE-iFEC sections and signaling is added into the header of each MPE-iFEC section so that the receiver can handle them. The MPE-iFEC sections are finally distributed over different bursts. A burst is composed of the MPE sections containing the IP packets belonging to this burst and of the MPE-iFEC sections which were built taking into account data from different bursts (mechanisms described in "MPE-IFEC, Draft TS 102 772 V1.1.1, DVB BlueBook A131, Nov. 2008"). Before being modulated and transmitted the sections are finally encapsulated into MPEG - Transport Stream (TS) packets which have a 5 or 4 bytes header and respectively 183 or 184 bytes payload.

The purpose of the receiver is to reorganize correctly all sections (MPE and MPE-iFEC), to decode data and redundancy and to recover the IP datagrams. As specified previously during the transmission fade events can occur meaning that some parts of the burst, and / or one or several bursts, can be lost.

Mechanisms are necessary so that sections belonging to the same burst are gathered and also so that new bursts are detected. Moreover it has to be mentioned that due to some limitations in the MPE header format, the burst identifier (that is the burst number) is carried only by the MPE-iFEC sections.

The time-slicing method was introduced in the Digital Video Broadcasting - Handheld (DVB-H) standard as described in "Transmission system for handheld terminals, ETSI EN 302 304 V1.1.1, Nov. 2004". Like in DVB-SH data (IP datagrams for instance) is transmitted after having being encapsulated into MPE sections (12 bytes header / 4 bytes CRC). MPE-FEC and MPE-iFEC sections can be used to add redundancy and thus to recover from errors in case of bad channel conditions. MPE sections are finally encapsulated in MPEG Transport Stream (188 bytes / 4 or 5 bytes header, Figure 2).

The MPEG-TS packets are sent together and have a specific packet identifier (PID). The PID identifies the elementary stream which can be an audio / video stream (TV channel broadcasted for instance) or data. The elementary stream (ES) is thus the service requested by the terminal, it can be a particular channel. Usually data is transmitted in a burst in a regular way and each burst can contain several MPE sections (Figure 3).

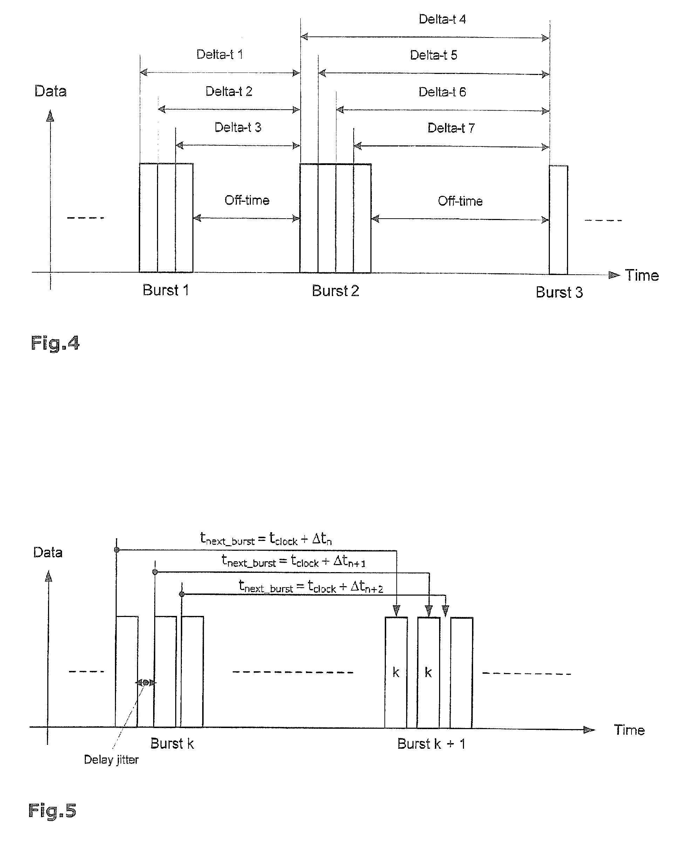

The functionality named "Time Slicing" allows bursts not to be sent at regular interval but in a more modular way as described in "Transmission system for handheld terminals, ETSI EN 302 304 V1.1.1, Nov. 2004". It permits to indicate when the next burst should arrive. The information is included into each MPE section (delta-t information in all MPE and MPE-iFEC sections) since some of them can be lost (bad channel conditions). The time indicated is not absolute but relative so that there is no concern about synchronizing the transmitter and the receiver (Figure 4).

The first challenge for the receiver is to identify to which burst (i.e. the burst number) a MPE section belongs to knowing that the burst number is not indicated. The mechanism described by MPE-IFEC, Draft TS 102 772 V1.1.1, DVB BlueBook A131, Nov. 2008 can be implemented and will be able to recover the burst number in the ideal case.

In the real case the receiver computes the next burst start based on its clock and on the delta-t information present in each MPE section (both MPE and iFEC):

$$t_{\text{next\_burst}} = t_{\text{clock}} + \Delta t$$

First of all a clock reference has to be implemented in the receiver so that the time-slicing method can be used. The clock has to be as accurate as possible and the layer at which the clock is considered will significantly impact the burst detection. The clock information can be labeled to the element of interest that can be a frame (physical layer) or a MPE section for instance (Layer 2).

Independent from the layer considered the time at which the next burst should start will suffer from jitter. If the clock is labelled at the physical layer (frame detection) then the processing time for the turbo decoding for instance will influence the computation. In the same manner if the clock is taken into account at the MPE level (easiest case since the delta-t information is located in the MPE header) then the time processing for the different operations (decapsulation, CRC check, distribution into ADTs and iFDTs, etc.) will also have an impact on the computation. This means that jitter is introduced while processing each section and that it results into a delay directly related to the time processing introduced by the layer considered. The impact of this delay is not negligible since MPE sections can be wrongly attributed to a burst (Figure 5).

In this example (Figure 5) the next burst start is calculated each time a MPE section is detected by the receiver. When a new MPE section is received the burst number to which it belongs to is unknown. The receiver compares the time at which the next burst should start and the current time in order to decide whether or not the MPE section belongs to the same burst or to another burst. Since the receiver is not active between the two bursts (data between the two bursts correspond to another elementary stream) it will detect without delay the first MPE section of the next burst. Because of the delay introduced in the computation of the next burst start the MPE section is detected as belonging to burst k whereas it belongs to burst k+1. The next MPE section is also detected as belonging to burst k for the same reason. In that case two MPE sections are wrongly taken into account for the burst k and this will directly impact the decoding process and introduce errors.

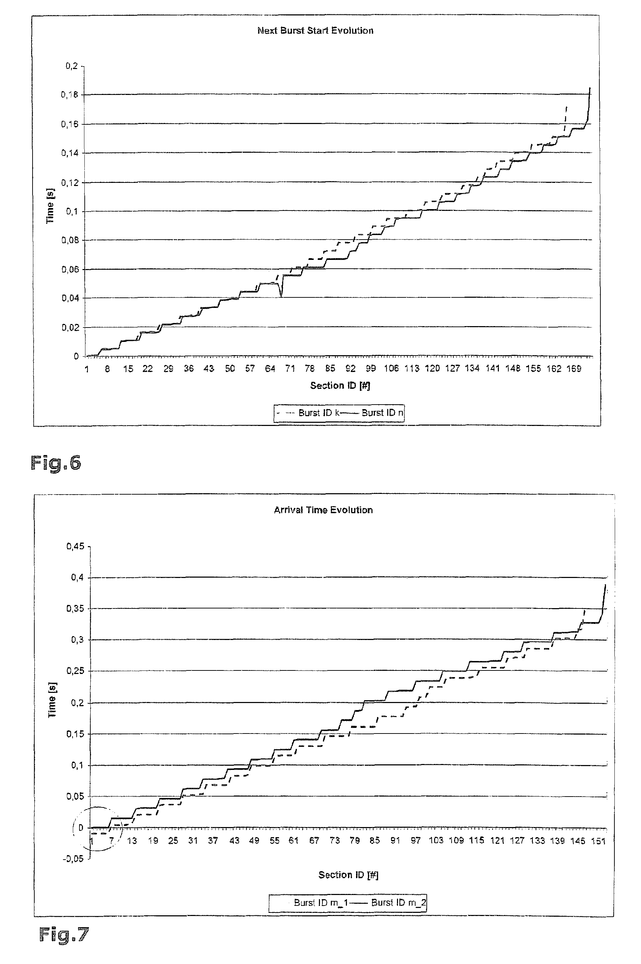

The next figure shows an example of the next burst start evolution in the receiver (Figure 6). The value of the next burst start was directly logged into the receiver and the computations were realized taking into account the next burst start value received with the first section. The graph thus shows the evolution of the next burst start according to the first value received for a given burst. In this example the evolution is shown for two different burst IDs. The following configuration was considered: number of rows (T) = 768, number of parallel matrices for ADTs (B) = 5 and number of iFDTs interleaved (S) = 5 / Reed-Solomon decoder. The next graph (Figure 7) displays the evolution of the section arrival time according to the burst start indication. Actually the arrival time evolution of burst ID k corresponds to the difference between the current arrival time and the next burst start value of the previous burst, i.e. burst k - 1. Negatives values indicate (circle) that the sections are detected as belonging to burst k - 1 (principle shown by Figure 5).

It is an object of the present invention to provide for a method of transmitting data from a transmitter to a receiver, whereby the transmission reliability is improved.

According to the invention, this object is achieved by the features of claim 1.

In a method of transmitting data from a transmitter to a receiver, in particular in a DVB-scenario, data is transmitted in consecutive bursts and each burst comprises a plurality of Multi-Protocol Encapsulation (MPE) and Multi-Protocol Encapsulation inter-burst Forward Error Correction (MPE-iFEC) sections. The data part of a burst is not necessarily completely filled and thus contains a padding, meaning that it is possible there is no data at the end of the application data sub table (ADST).

The transmitted sections comprise a time-slicing indicator indicating the remaining time until the start of the next burst. Each time a section is detected (that can be an MPE-section of an iFEC-section), the next burst start is calculated. For each MPE-section the receiver compares the time at which the next burst should start and the current time in order to decide whether this MPE-section belongs to the same burst or to a new burst.

According to the invention each time a section is detected the receiver calculates the time at which the next burst should start by adding to the current time the remaining time indicated by the time-slicing indicator present in the detected MPE-section and subtracting therefrom an offset-value which is chosen depending on a processing time delay at the receiver.

In other words the optimization proposed here comprises applying a simple offset to the computation of the next burst start so that the processing time delay of the receiver is taken into account. Since the distance between the two bursts, in particular the distance between the last section of a given burst and the first section of the next burst is in the order of several hundreds of milliseconds, the offset can be applied accordingly. Thus the computation of the next burst start is modified so that:

$$t_{next\_burst} = t_{clock} + \Delta t - \mathit{offset}$$

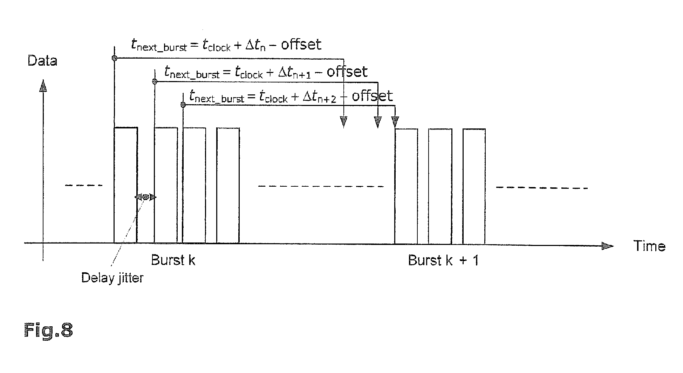

Thus when the offset is dimensioned correctly the two MPE-sections mentioned in figure 5 are now detected correctly as belonging to burst k+1. More details related to the inventive method will be described later in this application in the context of figure 8.

The value of the offset is chosen according to the performance of the receiver, e.g. it can be set to 150ms knowing that the distance between two consecutive bursts (with the ES of interest) is about 1s.

It is preferred that a clock reference is implemented in the receiver which is used for indicating the current time in the time-slicing method. The clock reference can be labeled to a frame in the physical layer or to an MPE-section in the data link layer.

Since the inventive method helps to allocate more sections correctly to the burst they belong to, this method helps to improve the transmission reliability.

A second independent invention is also related to a method of transmitting data with the same features as the first invention. Instead of using an offset value in the calculation of the next burst start, the inventive feature of the second invention is the use of one or a plurality of method steps for detecting the presence of a new burst.

For this purpose the transmitted sections comprise a time slicing indicator indicating the remaining time ($\Delta t$) until the start of the next burst and/or an address corresponding to the MPE-section payload in the application data subtable (ADST) and/or a section number allowing the receiver to determine the index and the position of the MPE-iFEC section payload in the Interburst-Forward-Error-Correction data tables (iFDTs). The presence of a new burst is detected by one or a plurality of the following method steps: First, the current value of the remaining time can be compared with the previous value of the remaining time, whereby, if the current value is bigger than the previous value, a new burst is detected. Second, the current address in an MPE-section can be compared with the previous address, whereby, if the current address is smaller than the previous address, a new burst is detected. As a third method step, the current section number in an MPE-iFEC section can be compared with the previous section number, whereby, if the current section number is smaller than the previous section number, a new burst is detected.

The proposed method steps are based on the assumption that data received over a satellite transmission has the same order as the transmitted one.

Thus the proposed method allows to gather sections belonging to the same burst and also to detect new bursts. It has to be considered that due to some limitations on the MPE-header format, the burst identifier (that is, the burst number) is carried only by the MPE-iFEC sections.

The present inventions are now described in relation with the following figures:

Figure 1 shows the layered approach of the MPE-iFEC transmission.

Figure 2 shows the encapsulation of IP datagrams over MPE and MPEG-TS.

Figure 3 shows a burst transmission at regular intervals.

Figure 4 shows a burst transmission using the time-slicing method.

Figure 5 shows the impact of the time processing delay on the burst detection according to the state of the art.

Figure 6 is an example of the next burst start evolution according to the state of the art.

Figure 7 is an example of the arrival time evolution according to the state of the art.

Figure 8 shows how the optimization of the next burst start computation according to the invention can be realized.

Figures 1-7 have been described in relation with the state of the art in the introduction of the present application.

As can be seen in figure 8 the computation of the next burst start (burst k+1 in this case) is optimized by adding to the current time the remaining time indicated by the time-slicing indicator present in the detected MPE-section and subtracting therefrom an offset-value which is chosen depending on a processing time delay at the receiver. As a consequence the first two segments of burst k+1 are indicated correctly as belonging to burst k+1 and not to burst k as shown in figure 5.

In the following some details related to the second independent invention are described.

There are several ways of detecting a new burst, the first one being the use of the time-slicing indicator when receiving an MPE section and the burst number when receiving an MPE-iFEC section as specified in "MPE-IFEC, Draft TS 102 772 V1.1.1, DVB BlueBook A131, Nov. 2008". Other mechanisms can be considered.

As specified previously the time-slicing method aims at informing the receiver about the start of the next burst. To do so a value (delta-t) is inserted into each section (MPE or iFEC) and indicates the remaining time until the first byte of the next burst should be received. The delta-t thus decreases over the time and the values indicated by subsequent sections within a burst can either be the same or smaller.

The mechanism proposed here to detect a new burst is based on this behavior and also on the fact that data received over satellite has the same order as the transmitted one (this is not necessarily the case for terrestrial networks). The principle comprises comparing the previous value of delta-t with the current one and determining if a new burst has arrived or not. This mechanism can be considered additionally the previous ones in order to add safety margins into the burst detection.

- If:

$$\Delta t_{current} > \Delta t_{previous}$$

then a new burst is detected,

- Else other mechanisms have to be taken into account.

MPE sections carry into their headers information about the address. The address corresponds to the position of the MPE section payload (more particularly the first byte) into the ADST as described in "MPE-IFEC, Draft TS 102 772 V1.1.1, DVB BlueBook A131, Nov. 2008". It permits to determine the column and the row at which the payload should be placed. According to the mechanisms used for the construction of the burst the MPE sections of a burst are transmitted one after the others meaning that the address increases between subsequent MPE sections within a burst (the satellite segment preserves the transmission order).

The mechanism proposed here comprises analyzing the current address and comparing it with the previous address received. If the current address is smaller than the previous one then a new burst was received. As previously this is an additional mechanism used to introduce safety margins in the burst detection.

- If:

$$address_{current} < address_{previous}$$

then a new burst is detected,

- Else other mechanisms have to be taken into account.

MPE-iFEC sections carry into their headers information about the section number. The section number allows the receiver to determine the position of the MPE-iFEC section payload into the iFDTs. It is used to compute, together with the burst number, the index and the column of the iFDT in which the payload has to be placed as described in "MPE-IFEC, Draft TS 102 772 V1.1.1, DVB BlueBook A131, Nov. 2008". According to the mechanisms used for the construction of the burst the section number increases from one iFEC section to the next one within the same burst. Moreover the satellite segment does not change the order of the transmission.

The mechanism proposed here comprises retrieving the current section number and comparing it with the previous section number received. If the current section number is smaller than the previous one then a new burst was received. As previously this is an additional mechanism used to introduce safety margins in the burst detection.

- If:

$$section\_number_{current} < section\_number_{previous}$$

then a new burst is detected,

- Else other mechanisms have to be taken into account.

The features of all methods described in the present invention can be combined arbitrarily into a single inventive method in order to improve the transmission reliability. E.g. a method can comprise the features of one of the claims 1-4 and additionally the features of claim 5.

**Claims**

1. Method of transmitting data from a transmitter to a receiver, in particular in a DVB-scenario, whereby data is transmitted in consecutive bursts and each burst comprises a plurality of Multi Protocol-Encapsulation (MPE) and Multi Protocol-Encapsulation-inter-burst-Forward Error Correction (MPE-iFEC)sections, whereby the data part of a burst (k) is not necessarily completely filled and thus can contain a padding, namely a data free area at the end of the ADST and whereby, the transmitted sections comprise a time-slicing indicator indicating the remaining time ($\Delta t$) until the start of the next burst whereby each time a section is detected, the next burst start is calculated and whereby for each MPE-section the receiver compares the time at which the next burst should start and the current time in order to decide whether this MPE-section belongs to the same burst or to a new burst, **characterized in that** each time an MPE-section is detected the receiver calculates the time at which the next burst should start by adding to the current time the remaining time ($\Delta t$) indicated by the time-slicing indicator present in the detected MPE section and subtracting therefrom an offset-value which is chosen depending on a processing time delay at the receiver.

2. Method according to claim 1 **characterized in that** a clock reference is implemented in the receiver which is used for indicating the current time in the time-slicing method.

3. Method according to claim 2 **characterized in that** the clock reference is labeled to a frame in the physical layer.

4. Method according to claim 2 **characterized in that** the clock reference is labeled to an MPE section in the data link layer.

5. Method of transmitting data from a transmitter to a receiver, in particular in a DVB-scenario, whereby data is transmitted in consecutive bursts and each burst comprises a plurality of Multi Protocol-Encapsulation (MPE) and Multi Protocol-Encapsulation-inter-burst-Forward Error Correction (MPE-iFEC)sections, whereby the data part of a burst (k) is not necessarily completely filled and thus can contain a padding, namely a data free area at the end of the ADST and whereby the transmitted sections comprise a time slicing indicator indicating the remaining time ($\Delta t$) until the start of the next burst and/or an address corresponding to the MPE-section payload in the application data subtable (ADST) and/or a section number allowing the receiver to determine the index and the position of the MPE-iFEC section payload in the Interburst-Forward-Error-Correction data tables (iFDTs) **characterized in that** the presence of a new burst is detected by one or a plurality of the following method steps:

   - Comparing the current value of the remaining time ($\Delta t_{current}$) with the previous value of the remaining time ($\Delta t_{previous}$), whereby if the current value ($\Delta t_{current}$) is bigger than the previous value ($\Delta t_{previous}$), a new burst is detected
   - Comparing the current address in an MPE-section with the previous address, whereby if the current address is smaller than the previous address, a new burst is detected
- Comparing the current section number in an MPE-iFEC section with the previous section number, whereby, if the current section number is smaller than the previous section number, a new burst is detected.

| Application / Transport | → | Internet Protocol (IP) | → | MPE Encap. / Frag. | → | Signalling and iFEC | → | MPEG2-TS | → | Modulation |

## Fig.1  Prior Art

IP Datagram

20 bytes

| IP |

MPE Section

12 bytes  20 bytes

| MPE | IP | | C R C |

4 bytes

183 bytes

| | MPEG-TS |

5 bytes

184 bytes

| | MPEG-TS |

4 bytes

184 bytes

| | MPEG-TS |

4 bytes

## Fig.2

Data

Delta-t          Delta-t

| PID x | PID y | | PID x | PID y | | PID x | PID y |

Time

## Fig.3

8

Delta-t 4

Delta-t 1

Delta-t 5

Data

Delta-t 2

Delta-t 6

Delta-t 3

Delta-t 7

Off-time

Off-time

Time

Burst 1

Burst 2

Burst 3

## Fig.4

$t_{next\_burst} = t_{clock} + \Delta t_n$

Data

$t_{next\_burst} = t_{clock} + \Delta t_{n+1}$

$t_{next\_burst} = t_{clock} + \Delta t_{n+2}$

k

k

Time

Burst k

Burst k + 1

Delay jitter

## Fig.5

**Fig.6**

**Fig.7**

$t_{next\_burst} = t_{clock} + \Delta t_n - \text{offset}$

$t_{next\_burst} = t_{clock} + \Delta t_{n+1} - \text{offset}$

$t_{next\_burst} = t_{clock} + \Delta t_{n+2} - \text{offset}$

Data

Time

Burst k

Burst k + 1

Delay jitter

Fig.8

Europäisches
Patentamt

European
Patent Office

Office européen
des brevets

# EUROPEAN SEARCH REPORT

Application Number

EP 10 18 8948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | DVB ORGANIZATION: "SSP0329_MPE-IFEC_v3.0.8.pdf", DVB, DIGITAL VIDEO BROADCASTING, C/O EBU - 17A ANCIENNE ROUTE - CH-1218 GRAND SACONNEX, GENEVA - SWITZERLAND, 13 October 2008 (2008-10-13), XP017821935, | 5 | INV. H04L1/00 H04L29/06 H04N7/20 |
| Y | * pages 1,7-10 * * pages 14-15,17 * * pages 18,30-34 * ----- | 1-4 | |
| Y,D | "Digital Video Broadcasting (DVB); DVB specification for data broadcasting; ETSI EN 301 192", ETSI STANDARDS, LIS, SOPHIA ANTIPOLIS CEDEX, FRANCE, vol. BC, no. V1.4.2, 1 April 2008 (2008-04-01), XP014041482, ISSN: 0000-0001 | 1-4 | |
| A | * page 39 - page 57 * ----- | 5 | |
| A | WO 2006/109169 A2 (NOKIA CORP [FI]; NOKIA INC [US]; KARKAS PASI A [FI]; ALAMAUNU JYRKI [F) 19 October 2006 (2006-10-19) * page 6, line 20 - page 7, line 7 * ----- | 1-5 | TECHNICAL FIELDS SEARCHED (IPC) H04L H04H H04N |
| A | WO 2009/044307 A2 (KONINKL PHILIPS ELECTRONICS NV [NL]; JOZEF PIETER VAN GASSEL [NL]; SHE) 9 April 2009 (2009-04-09) * the whole document * ----- | 1-5 | |

The present search report has been drawn up for all claims

| Place of search | Date of completion of the search | Examiner |
|---|---|---|
| Munich | 4 February 2011 | Richard, Romain |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................

& : member of the same patent family, corresponding
    document

Europäisches
Patentamt
European
Patent Office
Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 10 18 8948

The Search Division considers that the present European patent application does not comply with the
requirements of unity of invention and relates to several inventions or groups of inventions, namely:

```
1. claims: 1-4

      Method of taking into account the processing time of a
      receiver to improve the calculation of start time of the
      next burst in a DVB-scenario using Multi-Protocol
      Encapsulation.
                              ---

2. claim: 5

      Method of detecting the presence of a new burst by comparing
      values of current sections with values of sections received
      previously in a DVB-scenario using Multi-Protocol
      Encapsulation.
                              ---
```

## ANNEX TO THE EUROPEAN SEARCH REPORT
## ON EUROPEAN PATENT APPLICATION NO.

EP 10 18 8948

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2011

| Patent document cited in search report | | Publication date | Patent family member(s) | | Publication date |
|---|---|---|---|---|---|
| WO 2006109169 | A2 | 19-10-2006 | CN | 101189813 A | 28-05-2008 |
| | | | EP | 1869923 A2 | 26-12-2007 |
| | | | KR | 20080007459 A | 21-01-2008 |
| | | | US | 2006252404 A1 | 09-11-2006 |
| | | | ZA | 200709709 A | 31-12-2008 |
| WO 2009044307 | A2 | 09-04-2009 | CN | 101809903 A | 18-08-2010 |
| | | | EP | 2195948 A2 | 16-06-2010 |
| | | | KR | 20100068294 A | 22-06-2010 |
| | | | US | 2010313237 A1 | 09-12-2010 |

EPO FORM P0459

For more details about this annex : see Official Journal of the European Patent Office, No. 12/82